Europäisches Patentamt

(19) European Patent Office    (11) Publication number:  **0 030 085**

Office européen des brevets    **B1**

(12)    **EUROPEAN PATENT SPECIFICATION**

(45) Date of publication of patent specification: **16.05.84**    (51) Int. Cl.³: **B 62 D 55/20, F 16 J 15/38**

(21) Application number: **80303969.2**

(22) Date of filing: **06.11.80**

(54) **Load ring for end face seal assembly.**

(30) Priority: **03.12.79 PCT/US79/01036**

(43) Date of publication of application:
**10.06.81 Bulletin 81/23**

(45) Publication of the grant of the patent:
**16.05.84 Bulletin 84/20**

(84) Designated Contracting States:
**DE FR GB IT**

(56) References cited:
**DE-A-1 505 861**
**DE-C- 879 496**
**FR-A-1 561 064**
**FR-A-2 039 442**
**GB-A-1 513 607**
**US-A-3 185 488**
**US-A-3 437 385**
**US-A-3 787 098**
**US-A-4 089 531**
**US-A-4 094 516**
**US-A-4 132 418**

(73) Proprietor: **CATERPILLAR TRACTOR CO.**
**100 Northeast Adams Street**
**Peoria Illinois 61629 (US)**

(72) Inventor: **Roley, Robert D.**
**3710 Creighton Terrace**
**Peoria, Illinois 61615 (US)**

(74) Representative: **Jackson, Peter Arthur et al**
**GILL JENNINGS & EVERY 53-64 Chancery Lane**
**London WC2A 1HN (GB)**

Courier Press, Leamington Spa, England.

## Description

End face seals are commonly used in severe service environments to exclude external contaminants such as grit, water and the like from joints between members having limited rotational and axial movement therebetween. One such application for seals of this type is in the pin joints in endless track chains on track-laying earthmoving vehicles. Such track chains operate in extremely abrasive environments under all types of weather conditions. Consequently, the axial face load of the seals must be maintained at a substantial level to ensure that the seal will effectively exclude contaminants and retain lubricant, even under conditions of minimum load. In addition, the seal must accommodate a considerable amount of axial motion between the track joint members due to cumulative tolerances in manufacturing, stresses and strains in use, and wear. This imposes substantial demands upon track pin seals, since the seal must not only be sufficiently resilient to follow rapid movements of the joint members over a considerable temperature range, but also must exhibit a substantial wear life.

Extensive development work has been directed toward improving track pin seals. Numerous designs have been proposed, but, for the most part, they have been proven successful in use only to a limited extent.

In the track chain assembly process pairs of adjacent coacting pivotally interconnected links are sequentially pressed onto the ends of associated pins and bushings until a chain of a preselected length is formed. Typically, the links are placed upon roller conveyors, and the seal assemblies are pressed into associated counterbores. Press fitting of the seal assembly in the link counterbore moves the opposite edges of the inner and outer peripheral surfaces of the load ring closer together because of the parallelogram effect. It has been discovered that after assembly, the axial distance between these edges is small enough to render the load ring unstable, that is to say, if the seal assembly is inadvertently bumped on one side, for example by an adjacent link on the conveyor, the axial distance between the opposite edges on the other side may decrease to zero or less. The load ring on that side therefore rotates inwardly and "pops out" of the counterbore. If not noticed and the links are pressed on their respective bushing with the seal not properly positioned, premature failure of the joint occurs.

Still another problem associated with prior art seals of this type results from the relatively high press or interference fit, about 0.5% to 2.0% of the diameter, and the operational relationship between the load ring and the relatively stiff support ring. The magnitude of this fit renders assembly of the seal relatively difficult and leads to inconsistent positioning of the seals in the links in the assembly process.

Further, when the load ring is in the compressed state, its exterior face bulges outwardly against the upper inclined inner surface of the support ring creating an undesirable localized area of high strain, of the order of approximately 70% in the bulge portion, as opposed to approximately a uniform 60% strain in the remaining portion of the load ring. This strain discontinuity reduces the fatigue life of the elastomeric material.

Yet another problem arises at the interface between the load ring and the inclined inner surface of the support ring, where the contact forces are relatively high but gradually taper to zero at the point of last contact between the bulge and the incline. This condition permits grit and other contaminants to collect between the two members, and, in operation, the approximately $\pm 1°$ of "windup" or relative rotational motion between the load ring and the support ring causes substantial erosion of the elastomeric material. Significant erosion of the load ring also occurs on start up and stop of the track where "windup" has been found to be as high as $\pm 4°$. This erosion also contributes to premature track pin joint failure and expensive vehicle downtime.

The foregoing illustrates limitations of the known prior art. In view of the above, it would be advantageous to provide an alternative to the prior art in the form of an improved end face seal assembly having a long life expectancy and operational effectiveness over a wide range of deflection in the severe service environment of a track joint, and which seal assembly will overcome the problems associated with the prior art.

The present invention relates to a kind of annular end face seal assembly, as disclosed in US—A—4094516, and having a resilient load ring and a seal and support ring means all concentrically disposed about a central axis, the load ring being positioned between a first seat provided within a first member and a second seat defined about the seal and support means for axially urging the seal and support ring means into sealing engagement against an end face of a second member; and the resilient load ring comprising a substantially cylindrical outer axially extending peripheral surface and a first end face extending radially inwardly therefrom for joint engagement with the first seat, a substantially cylindrical inner axially extending peripheral surface and a second end face extending radially outwardly therefrom for joint engagement with the second seat, an interior surface extending between the first end face and the inner surface, and an exterior surface extending between the outer surface and the second end face and providing in the free state and in axial cross section a shallow recess extending between an edge on the outer surface and another edge on the second end face. According to the invention an assembly of this kind is characterised in that the shallow recess is arcuate and defined by a radially outer portion extending normally to the central axis and terminating at the edge on the outer surface and a radius extending from the outer portion to the edge on the second end face, the radius having a length within a range of 0.45 to 1.2 times the distance between the edges.

An example of an end face seal assembly in accordance with the invention is illustrated in the accompanying drawings, in which:—

Figure 1 is an axial section through a track joint embodying the seal assembly;

Figure 2 is an enlarged view of part of Figure 1; and,

Figure 3 is a view similar to Figure 2 but illustrating the seal assembly in the unloaded position or free state.

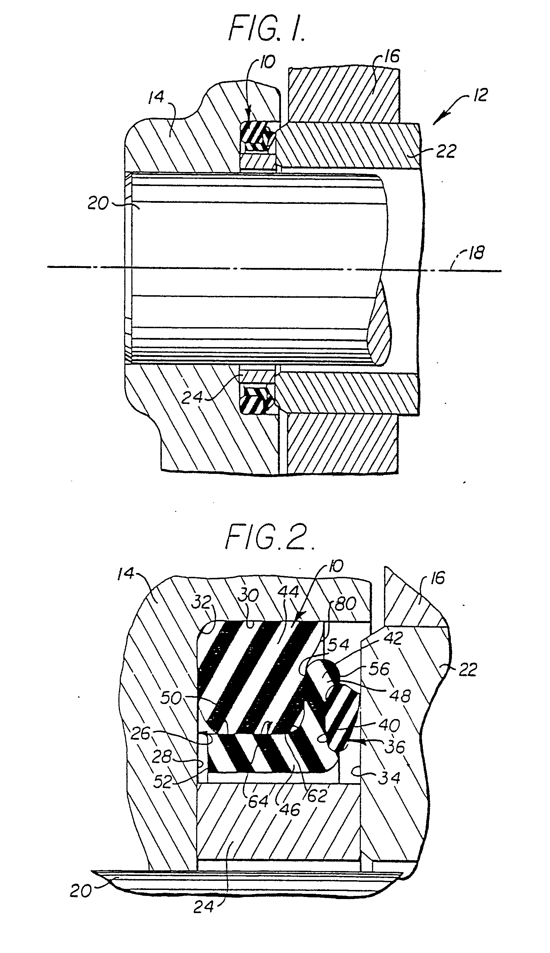

Referring to Figure 1, a track joint 12, incorporating an end face seal assembly 10, includes first and second cooperating, pivotally interconnected overlapping links 14, 16. The links are coaxially mounted along a pivot axis 18 to a track pin 20 and an associated cylindrical bushing 22 respectively and a spacer ring 24 disposed intermediate the links.

As shown in greater detail in Figure 2, a counterbore or seat 26 is formed in the first link 14 and is defined by an axially outwardly facing end face 28, a cylindrical surface 30, and a blended arcuate corner portion 32. The spacer ring 24 is loosely positioned on the track pin 20 and abuts the face 28 and an axially inwardly facing end face 34 on the bushing 22 to limit the minimum axial distance therebetween.

The end face seal assembly 10 is disposed generally concentrically with the axis 18 within the counterbore 26 and axially seals against the end face 34 of the bushing 22 to retain lubricant within the track joint 12 and to prevent the entry of dirt or other contaminants therein. The seal assembly includes a resilient seal ring 36 for dynamic primary sealing engagement with the end face 34. The seal ring has a generally triangular cross section having a sealing lip or axial outward face 38 engaging the bushing end face and an annular base 40 which may be securely bonded or otherwise connected to a relatively rigid support ring 42. The seal assembly further includes a resilient load ring 44 for supporting the support ring and the seal ring in the counterbore and for providing static secondary sealing engagement with both the support ring and the counterbore.

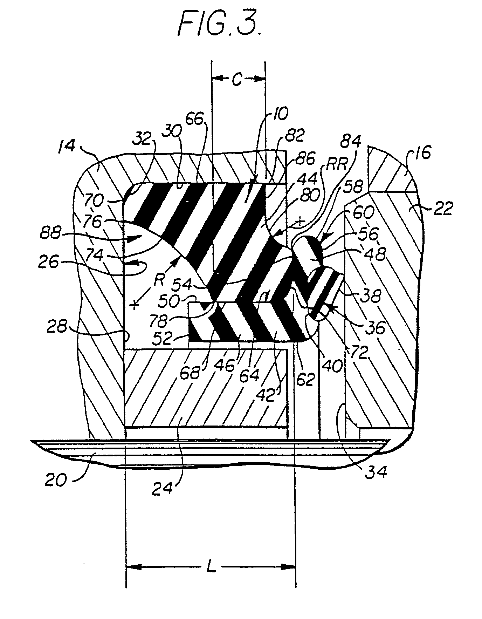

Referring now to Figures 2 and 3, the support ring 42 and the load ring 44 are illustrated in greater detail. The support ring has a generally L-shaped cross sectional configuration having a generally axially extending cylindrical portion 46 and an integrally connected generally radially extending portion 48. The cylindrical portion defines a cylindrical surface 50 and an axially inner end 52, and the radially extending portion defines an axially inwardly facing end face 54, an axially outwardly facing end face or seat 56, and a rounded, radially outer peripheral edge 58 extending therebetween defining a generally rounded end portion 60. The base 40 of the seal ring 36 is bonded or otherwise sealingly secured to the outwardly facing seat of the support ring. Moreover, a blended arcuate corner portion 62 connects the surface 50 and the end face 54 to define a seat 64 that faces opposite the counterbore or seat 26 in the link 14.

The construction of the load ring 44 is best illustrated in Figure 3 where it is shown in the unloaded or free state. The load ring is preferably constructed of an elastomeric resilient material, for example epichlorohydrin copolymer rubber having a durometer "A" scale hardness magnitude in a range of about 40 to 70 and a relatively low tensile modulus magnitude (Young's modulus) of approximately 3 MPa (500 psi). The free cross section thereof is of a generally parallelogram shaped configuration defined by cooperating substantially cylindrical, axially extending, outer and inner peripheral surfaces 66, 68, a first end face 70 extending radially inwardly from the outer peripheral surface, a second end face 72 extending radially outwardly from the inner peripheral surface, a generally concave interior surface 74 extending between the first end face at a first edge 76 and the inner peripheral surface at a second stage 78, and a generally concave exterior surface 80 extending between the outer peripheral surface at a third edge 82 and the second end face at a fourth edge 84.

The outer peripheral surface 66 of the load ring 44 is in a press fit relationship with the cylindrical surface 30 of the counterbore 26. Similarly, the inner peripheral surface 68 is in a press fit relationship with the cylindrical surface 50 of the support ring 42. The load ring is solely connected to the counterbore and support ring by these pressed or interference fits without the use of a binding agent. Preferably, both fits lie within a range of a free fit to about 0.4% of the diameters of the cylindrical surfaces 30 and 50 respectively.

A preferred construction parameter of the load ring 44 exists in the preselected geometry of the interior surface 74 when it is in the unloaded or free state. The interior surface is characterized by a shallow arcuate recess defined by a revolved radius R having a length within a range of about 0.9 to about 1.5 times the distance between the first and the second edges 76, 78. It has been determined that by keeping the radius length within this preselected range, buckling of the load ring will be avoided, if, for example, the radius is too small. Conversely, if the radius is too large, the axial face load upon the seal ring will increase undesirably fast, because the compressed load ring will fill the available space in the counterbore 26 too rapidly.

Another preferred construction parameter of the load ring 44 resides in the preselected geometry of the exterior surface 80 when it is in the unloaded or free state. The exterior surface is characterized by a shallow arcuate recess defined in combination by a radial outer portion 86 normal to the axis 18 and by a revolved radius RR, as indicated on the drawing, having a length within a range of about 0.45 to about 1.2 times the distance between the third and the fourth edges 82, 84. Preferably the radius has a length within a range of about 0.5 to about 0.7 times the distance between the third and fourth edges, and ideally, the radius has a length approximately equal to about 0.6 times the distance between the third and the fourth edges.

Yet another preferred construction parameter of the load ring 44 exists in the preselected axial distance C between the second and third edges 78, 82 in the free state. Within the restrictive limitations imposed by the radial and axial dimensions of the counterbore receiving the seal assembly, it is advantageous to maintain this distance within a preselected range to control the stability of the load ring. Preferably, the axial distance C between the second and third edges is within the range of about 0.25 to about 0.6 times the overall axial length L of the load ring. Ideally, this distance is within a range of about 0.3 to about 0.35 times the overall axial length of the load ring.

In operation, the end face seal assembly 10 provides a gradually increasing axial face load on the sealing lip 38 as the load ring 44 is loaded in shear between the seats 26 and 64 and compressed between the free state illustrated in Figure 3 and the fully loaded state illustrated in Figure 2 in response to relative axial movement between the first and second links 14, 16. The axial face load is maintained at a preselected minimum value upon the initial installation of the seal assembly in the track joint in order to assure positive retention of lubricant and to exclude the entry of foreign contaminants therein. Importantly, the decreased interference or pressed fit relationship of the load ring and the cylindrical surface 30 of the counterbore 26 results in increased ease of installation of the seal and better consistency in assembly thereof.

As the seal assembly 10 is compressed, the exterior surface 80 of the load ring 44 is deformed in such a way that its concave shape becomes generally curvilinear, as is best illustrated in Figure 2. It is of significance to note that in the compressed state, the improved load ring is free from the undesirable axially outwardly bulging of the exterior surface of prior art load rings and the resultant strain discontinuity between the bulging portion and the remaining portion thereof. Moreover, the exterior load ring surface and the generally rounded end portion 60 of the support ring are constructed and arranged so as to be free from engagement with one another when the seal assembly is compressed. Advantageously, the absence of contact between these seal assembly members 80, 60 eliminates the accumulation of dirt and other foreign contaminants therebetween eliminating erosion of the elastomeric material of the load ring and associated premature failure of the seal assembly.

Simultaneously, as the load ring 44 is compressed the interior surface 74 engages the end face 28 of the link 14 and also allows a controlled increase of the internal strain rate of the load ring. Specifically, the unfilled area 88 between the link end face and the load ring is at least 90% filled by the load ring in the position of maximum compression which maximizes effective use of the minimal available space and avoids weakening of the first link 14 as would be the case with a counterbore of larger dimensions.

### Claims

1. An annular end face seal assembly (10) having a resilient load ring (44) and a seal and support ring means (36, 42) all concentrically disposed about a central axis (18), the load ring (44) being positioned between a first seat (26) provided within a first member (14) and a second seat (64) defined about the seal and support means (36, 42) for axially urging the seal and support ring means (36, 42) into sealing engagement against an end face (34) of a second member (22); and the resilient load ring (44) comprising a substantially cylindrical outer axially extending peripheral surface (66) and a first end face (70) extending radially inwardly therefrom for joint engagement with the first seat (26), a substantially cylindrical inner axially extending peripheral surface (68) and a second end face (72) extending radially outwardly therefrom for joint engagement with the second seat (64), an interior surface (74) extending between the first end face (70) and the inner surface (68), and an exterior surface (80) extending between the outer surface (66) and the second end face (72) and providing in the free state and in axial cross section a shallow recess extending between an edge (82) on the outer surface (66) and another edge (84) on the second end face (72); characterised in that the shallow recess is arcuate and defined by a radially outer portion (86) extending normally to the central axis (18) and terminating at the edge (82) on the outer surface (66) and a radius (RR) extending from the outer portion (86) to the edge (84) on the second end face (72), the radius (RR) having a length within a range of 0.45 to 1.2 times the distance between the edges (82, 84).

2. An assembly according to claim 1, wherein in the free state, the load ring (44) has an overall axial length (L) between the end faces (70, 72) and the exterior surface (80) extends from the edge (82) on the outer cylindrical surface (66) and the interior surface (74) extends from another edge (78) on the inner cylinder surface (68), these edges (82, 78) being disposed axially between the end faces (70, 72) and axially spaced apart from each other by a distance (C) within a range of 0.25 to 0.6 times the overall axial length (L) of the load ring.

3. An assembly according to claim 2, wherein the axial distance (C) is within a range of 0.3 to 0.35 times the overall axial length (L).

4. An assembly according to any one of the preceding claims, wherein the seal and support ring means (36, 42) includes a generally radially extending portion (48) having a generally rounded end portion (60) provided thereon, and the load ring (44) is so constructed and arranged that in response to axial loading, the exterior surface (80) deflects in a manner so as to be free from contact with the rounded end portion (60).

## Patentansprüche

1. Eine ringförmige Endstirnflächenabdichtanordnung (10) mit einem elastischen Lastring (44) und Dichtungs- und Tragringmitteln (36, 42), sämtlich konzentrisch um eine Mittelachse (18) herum angeordnet, wobei der Lastring (44) zwischen einem ersten, innerhalb eines ersten Glieds (14) vorgesehenen Sitz (26) und einem zweiten, um die Dichtungs- und Tragmittel (36, 42) herum definierten Sitz (64) positioniert ist, um die Dichtungs- und Tragringmittel (36, 42) in Dichteingriff gegen eine Endfläche (34) eines zweiten Glieds (22) axial zu drücken, und wobei der elastische Lastring (44) folgendes aufweist: eine im wesentlichen zylindrische äußere, sich axial erstreckende Umfangsoberfläche (66) und eine erste Endstirnfläche (70), sich radial nach innen von dort aus zum gemeinsamen Eingriff mit dem ersten Sitz (26) erstreckend, eine im wesentlichen zylindrische innere, sich axial erstreckende Umfangsoberfläche (68) und eine zweite Endstirnfläche (72), sich radial nach außen von dort zum gemeinsamen Eingriff mit dem zweiten Sitz (64) erstreckend, eine Innenoberfläche (74), sich zwischen der ersten Endstirnfläche (70) und der Innenoberfläche (68) erstreckend, und eine Außenoberfläche (80), sich zwischen der Außenoberfläche (66) und der zweiten Endstirnfläche (72) erstreckend und in dem freien Zustand und im Axialquerschnitt eine flache Ausnehmung aufweisend, und zwar sich erstreckend zwischen einer Kante (82) an der Außenoberfläche (66) und einer weiteren Kante (84) an der zweiten Endstirnfläche (72), dadurch gekennzeichnet, daß die flache Ausnehmung bogenförmig ist und definiert wird durch einen radial äußeren Teil (86), sich senkrecht zur Mittelachse (18) erstreckend und endend an der Kante (82) auf der Außenoberfläche (66), und mit einem Radius (RR), sich vom Außenteil (86) zur Kante (84) auf der zweiten Endstirnfläche (72) erstreckend, wobei der Radius (RR) eine Länge innerhalb eines Bereichs des 0,45- bis 1,2-fachen des Abstandes zwischen den Kanten (82, 84) besitzt.

2. Anordnung nach Anspruch 1, wobei im freien Zustand der Lastring (44) eine Gesamtaxiallänge (L) zwischen den Endstirnflächen (70, 72) besitzt und die Außenoberfläche (80) sich von der Kante (82) auf der äußeren zylindrischen Oberfläche (66) und der inneren Oberfläche (74) von einer weiteren Kante (78) auf der inneren Zylinderoberfläche (68) erstreckt, wobei diese Kanten (82, 78) axial zwischen den Endstirnflächen (70, 72) angeordnet sind, und zwar mit Axialabstand voneinander um einen Abstand (C) innerhalb eines Bereichs des 0,25- bis 0,6-fachen der Gesamtaxiallänge (L) des Lastrings.

3. Anordnung nach Anspruch 2, wobei der Axialabstand (C) innerhalb eines Bereichs des 0,3- bis 0,35-fachen der Gesamtaxiallänge (L) liegt.

4. Anordnung nach irgendeinem der vorhergehenden Ansprüche, wobei die Dichtungs- und Tragringmittel (36, 42) einen sich im Ganzen radial erstreckenden Teil (48) aufweisen, mit einem im Ganzen abgerundeten Endteil (60), vorgesehen darauf und wobei der Lastring (44) derart ausgelegt und angeordnet ist, daß infolge von Axialbelastung sich die Außenoberfläche (80) in der Weise auslenkt, daß sie frei gegenüber einer Berührung mit dem abgerundeten Endteil (60) ist.

## Revendications

1. Ensemble d'étanchéité annulaire (10) pour face terminale ayant une bague de charge élastique (44) et des moyens d'étanchéité et de bague de support (36, 42) tous disposés concentriquement autour d'un axe central (18), la bague de charge (44) étant disposée entre un premier siège (26) ménagé dans un premier élément (14) et un second siège (64) défini autour des moyens d'étanchéité et de support (36, 42) pour solliciter axialement les moyens d'étanchéité et de bague de support (36, 42) en contact d'étanchéité contre une face terminale (34) d'un second élément (22); et la bague de charge élastique (44) comprenant une surface périphérique essentiellement cylindrique, externe et s'étendant axialement (66) et une première face terminale (70) s'étendant radialement vers l'intérieur en vue d'un contact d'étanchéité avec le premier siège (26), une surface périphérique essentiellement cylindrique interne et s'étendant axialement (68) et une seconde face terminale (72) s'étendant radialement vers l'extérieur en vue d'un contact d'étanchéité avec le second siège (64), une surface intérieure (74) s'étendant entre la première face terminale (70) et la surface interne (68), et une surface extérieure (80) s'étendant entre la surface externe (66) et la seconde face terminale (72) et ménageant à l'état libre et en section axiale un évidement peu profond s'étendant entre un bord (82) sur la surface externe (66) et un autre bord (84) sur la seconde face terminale (72), caractérisé en ce que l'évidement peu profond est en forme d'arc et est défini par une partie externe radialement (86), s'étendant normalement jusqu'à l'axe central (18) et se terminant au bord (82) sur la surface extérieure (66) et un rayon (RR) s'étendant depuis la partie externe (86) jusqu'au bord (84) sur la seconde face terminale (72), le rayon (RR) ayant une longueur comprise entre 0,45 et 1,2 fois la distance entre les bords (82, 84).

2. Ensemble selon la revendication 1, dans lequel à l'état libre, la bague de charge (44) a une longueur axiale totale (L) entre les faces terminales (70, 72), la surface extérieure (80) s'étend du bord (82) sur la surface cylindrique externe (66) et la surface intérieure (74) s'étend d'un autre bord (78) sur la surface cylindrique interne (68), ces bords (82, 78) étant disposés axialement entre les faces terminales (70, 72) et étant espacés axialement l'une de l'autre d'une distance (C) comprise entre 0,25 et 0,6 fois la longueur axiale totale (L) de la bague de charge.

3. Ensemble selon la revendication 2, dans lequel la distance axiale (C) est comprise entre 0,3 et 0,35 fois la longueur axiale totale (L).

4. Ensemble selon l'une quelconque des revendications précédentes, dans lequel les moyens d'étanchéité et de bague de support (36, 42) comprennent une partie s'étendant généralement radialement (48) ayant une partie terminale généralement arrondie (60) sur elle, et la bague de charge (44) est construite et agencée de façon qu'en réponse à une charge axiale, la surface extérieure (80) fléchit d'une façon à être libérée du contact avec la partie terminale arrondie (60).

## FIG. I.

## FIG. 2.

# FIG.3.